(19) Europäisches Patentamt
European Patent Office
Office européen des brevets

(11) **EP 2 506 164 A1**

(12) **EUROPEAN PATENT APPLICATION**

(43) Date of publication:
**03.10.2012 Bulletin 2012/40**

(51) Int Cl.:
***G06F 17/30*** *(2006.01)*

(21) Application number: **11305342.5**

(22) Date of filing: **28.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Aroule, Christian**
**78141, VELIZY (FR)**
• **Mazars, Florence**
**78141, VELIZY (FR)**

• **Du, Siying**
**75019, PARIS (FR)**
• **Mendoza Resendiz, Israel**
**54190, Tlalnepantla (MX)**
• **Bellino, Catherine**
**78141, VELIZY (FR)**

(74) Representative: **Shamsaei Far, Hassan et al**
**Alcatel-Lucent International**
**32, avenue Kléber**
**92700 Colombes (FR)**

Remarks:
Claims filed after the date of filing of the application (Rule 68(4) EPC).

(54) **Transformation information portal**

(57) Method to provide a faceted access, combining different viewpoints on different subjects, and transversal relationships, to allow users building their own customized navigation path.

FIG_1

**Description**

Field of the Invention

The invention relates to a method to provide a faceted access, combining different viewpoints on different subjects, and transversal relationships, to allow users building their own customized navigation path.

Background

In the area of Knowledge Management, a major problem occurs in ontology-based portals (e.g. Ontoprise, Thinkmap...); 'contiguous' domains such as Enterprise Business Process Management, Document Management System, Portfolio Management.
None of these systems combine the capacity of faceted access and knowledge cartography visualization and access to documentation and contents of different natures and via different gateways.

Brief Description of the Figures

Fig. 1     shows a global overview of the invention

Fig. 2     shows the Search Engine Function for Transformation Information Portal

Description of the Embodiments

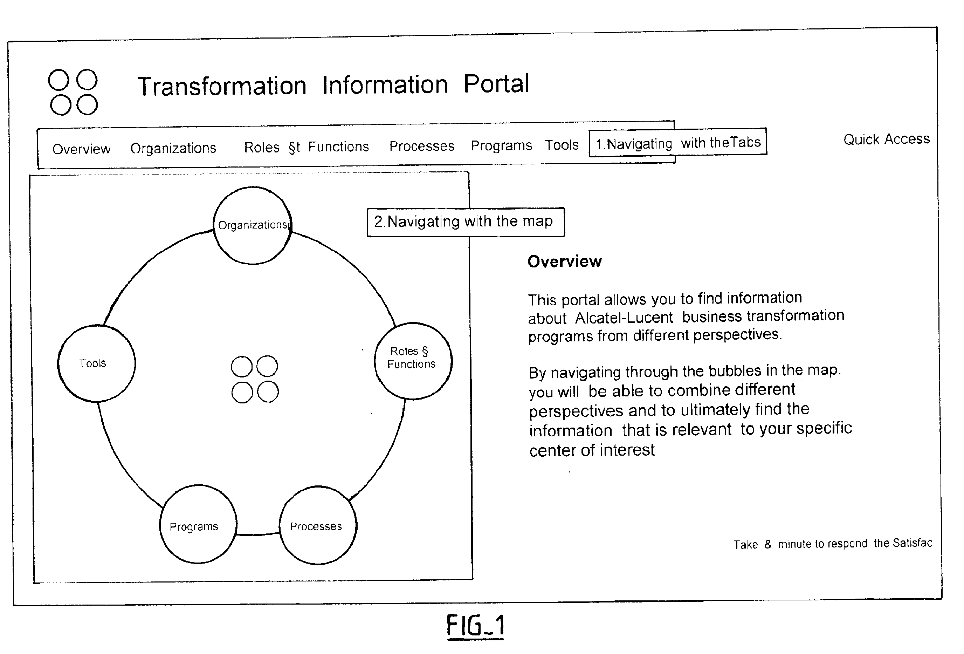

In figure 1, the invention presents a solution based on Sharepoint technology
The solution provides a faceted access, combining different viewpoints ('dimensions' and 'sub-dimensions') on different subjects, and transversal relationships ('Associated Dimensions'), to allow users building their own customized navigation path.
The invention provides a structure which federate and share data of different nature, stored in different sources without any content duplication, and used them for the business transformation in a whole company on a common platform, according to a common knowledge systemic visualization(cartography).
The invention uses existing, mature and adopted technology: use of Sharepoint full capacity in order to capitalize on a deployed and widely used platform, thus avoiding infrastructure and training investment for the company.
In the present invention each specific user has a single entry point ('one stop shopping') to get the relevant and complete information, at the right time, for his specific needs.
The invention avoids data duplication across different entities.
Interface is created with different systems to aggregate the information that is essential to transformation, without duplicating it
The invention is a user-centric tool, focused on usability (effectiveness + efficiency + satisfaction), based on a user-centered design methodology (interviews, user-testing, iterative design based on continuous users' feedback).
The associated dimension is a list view is a SharePoint list. The main solution is to build SharePoint Hyperlink in a sharepoint list with calculate columns directly and displayed them in a SharePoint list view.

1\Associated Dimensions need to be filtered by parameter of Asp.net control (eg. Parameter A in the chart above)
2\Associated Dimensions will contain Parameter B, and it can directly pass (hyperlink) and filter Parameter A and Parameter B to the Data view in other pages. Note: Pages are dynamic--depend on the selection associated dimension(s), the parameters will pass and filter different page(s)
3\Associated Dimensions are displayed in 2 Levels by a tree-view style.

The invention defines:

--Using Query String Parameter(s) to build up dynamic URLs
--Using Calculated column(s) and Java script coding to generate Hyperlinks in the list direct and display in Data view with "Group" Function.

the invention comprises the Steps of:

## 1\Build up a list with columns below:

| Column (click to edit) | Type |
| --- | --- |
| Page | Single line of text |
| Filter Column | Single line of text |
| Grouping Column | Single line of text |
| Dimensions | Single line of text |
| PageName | Single line of text |
| Link1 | Calculated (calculation based on other columns) |
| Html 1 | Calculated (calculation based on other columns) |
| URL for BTIP | Single line of text |
| Html2 | Calculated (calculation based on other columns) |
| part1 | Single line of text |
| part2 | Single line of text |
| coding for URL filter | Single line of text |
| coding for URL filter Parameter | Single line of text |
| Link(F) | Calculated (calculation based on other columns) |

The columns are used to build the hyperlink, which mainly contains three steps: Step 1-- build up the dynamic links(Link 1 in the list):

Combined Columns [URL for BTIP], [PageName], [coding for URL filter], [coding for URL filter Parameter], [Filter Column], [Dimensions]and needed elements by formula-

```
=[URL for BTIP]&[PageName]&".aspx"&"?"&[coding for URL filter]&"="&[coding for URL filter Pa-
rameter]&"&Filter%20Column="&[Filter Column]&"&Dimensions="&[Dimensions]
```

Step 2—build up the whole coding for Hyperlink: Used calculated column(Link(F) in the list) by formula-

```
="<DIV>"&[part1]&[Link1]&[part2]&[Dimensions]&"</a>"&"</DIV>"
```

Step 3—add java script below to the list page

```
<script type="text/javascript">
var theTDs = document.getElementsByTagName("TD");
var i=0;
var TDContent = " ";
while (i < theTDs.length) {
try {
TDContent = theTDs[i].innerText || theTDs[i].textContent;
if ((TDContent.indexOf("<DIV") == 0) && (TDContent.indexOf("</DIV>") >= 0)) {
theTDs[i].innerHTML = TDContent;
}
}
catch(err){}
i=i+1;
}
function ExpGroupRenderData(htmlToRender, groupName, isLoaded) {
var tbody=document.getElementById("tbod"+groupName+"_");
var wrapDiv=document.createElement("DIV");
wrapDiv.innerHTML="<TABLE><TBODY id=\"tbod"+ groupName+"_\" isLoaded=\""+isLoaded+
"\">"+htmlToRender+"</TBODY></TABLE>";
var theTBODYTDs = wrapDiv.getElementsByTagName("TD"); var j=0; var TDContent = " ";
while (j < theTBODYTDs.length) {
try {
TDContent = theTBODYTDs[j].innerText || theTBODYTDs[j].textContent;
if ((TDContent.indexOf("<DIV") == 0) && (TDContent.indexOf("</DIV>") >= 0)) {
theTBODYTDs[j].innerHTML = TDContent;
}
}
catch(err){}
j=j+1;
}
tbody.parentNode.replaceChild(wrapDiv.firstChild.firstChild,tbody);
}
</script>
```

After build up the list, build list view (data view) based on the list which-

1\connect and filter by Asp.net control(s) in the page(s)
2\Grouped it by the [grouping column] and adjust the display
3\change the coding in the page-take a closer look at the source code behind the DVWP. The code that renders the Indicator field depends on how you created the DVWP:

*if directly from the data source library, using the "Insert Selected Fields" option:

```
<td class="ms-vb">
        <xsl:value-of select="@Indicator"/></td>
```

*if by converting a list view

```
<!--Indicator-->
<!--Indicator-->
<TD Class="{$IDAXOQVC}"><xsl:value-of disable-output-escaping="yes" se-
lect="ddwrt:AutoNewLine(string(@Indicator))" /></TD>
```

Change the code as follow:

```
<td class="ms-vb">
<xsl:value-of disable-output-escaping="yes" select="@Indicator" />
</td>
```

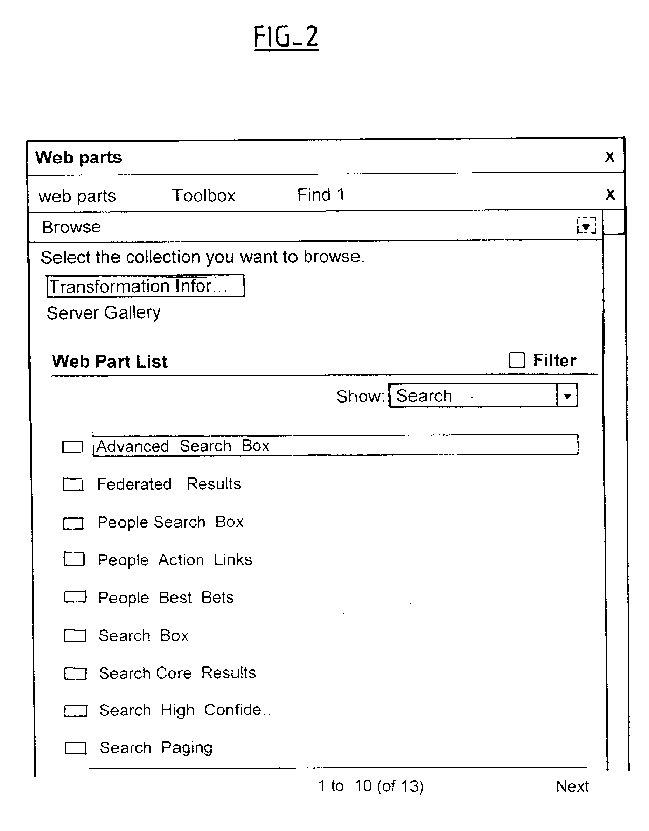

In figure 2, the search engine for TIP is a customized search function in SharePoint. The main solution is to build the search box and the search result page based on the web parts in the SharePoint.

The Search engine should be accessible through the whole TIP site;

Users can search documents in certain customized search scopes;

the content (search results, format, ect) need to be customized and display needed messages.

the search result needs to be opened in a new window.

The invention provides:

--Using different search webs to build up the basic search functions;

--use some Java Script coding to customize the display of the search scope;

--use Java Script coding to open a new window for the search result page;

--make change in Shared Service Provider in the central administration SharePoint website to customize the content of the search scope;

The invention comprises the steps of :

1\Build up the search result page, which including the webparts below:

- ● search box webpart
- ● search result webpart
- ● search paging webpart

and all these three webpart is the customized web part in SharePoint designer, which one can add them directly by using insert web parts function in the SharePoint designer.

2\Create Contextual scopes in Shared Service Provider (SSP) which is located the central administration SharePoint site.

In the steps outlined below, we will be creating a SSP level scope called "All Documents" and add a rule to include only documents.

2-1: Create a all documents scope

• Browse to the central administration site and Click on the SSP.

• Click on search settings and then Click on view Scopes.

• Click on new scope link.

• Enter title as "All Documents" and leave other details blank and Click OK.

2-2: Allow the "IsDocument" property to be used in scopes

IsDocument is a managed property provided by SharePoint and is true for all documents only. Therefore, before adding a scope rule to the scope "All Documents", we must ensure that this property can be used in scope. Follow the steps to allow the property to be used in scopes.

• Browse to the central administration site.

• Click on the Shared Service Provider (SSP).

- Click on Search settings

- Click on metadata property mappings.

- Find the managed property IsDocument and set "Use in Scope" property to true and Click Ok.

2-3: Add scope rule

- Browse to the central administration site.

- Click on the Shared Service Provider (SSP) for the site.

- Click on Search settings

- Click on View Scopes.

- Click on Edit Properties and rules for the scope "All Documents".

- Click on New Rule.

- Add a property query rule where the property IsDocument=1 and set the scope behavior to require and click OK.

3\Build search scope in the Site collection level

A scope display group is used to organize a list of scopes. The scope display group is then assigned to a search box to be able to search on those scopes. To add the scope "All Documents" to a scope display group, follow the steps below:

- Browse to the site collection for your search center (This is the site collection which has your search page).

- Select Site actions>Site settings>Search scopes. You will notice that the scope "All Documents" has no scope display group assigned at this time. We can either create a new display group and add or add it to an existing group.

- Click on the scope display group "Search Dropdown" and Select the scope "All Documents".

4\Insert Search box web part in each TIP page, using the scope display group for a search box web part

The scope display group "Search Dropdown" has our scope included in it. In this step, we will ensure that our search box webpart uses this scope display group.

- Browse to the search page and select site actions>edit page.

- Select edit>modify shared webpart on the search box web part.

- On the properties pane, expand the section miscellaneous and check the property value for the property scope display group and make sure that it is "Search Dropdown" as selected step 3

And then Java Script need to add at the beginning of the page (after the <meta>) to make sure only customized scopes are displayed as the search scope.(Otherwise, there is a "this site:xxx" scope will always displayed in the search scope.)

```
<script type="text/javascript">
    function removeOption(checkChar) {
        var x =
document.getElementById("g_573fdd53_9be5_4448_84b9_2d94e12b6f73_SBScopesDDL");
        for (i = 0 ; i < x.length; i++) { if (x.options[i].text.indexOf(checkChar) != -1) {
x.remove(i); i--; } } }
</script>
</head>

<body scroll="yes" onload="javascript:if (typeof(_spBodyOnLoadWrapper) != 'undefined') {
_spBodyOnLoadWrapper(); removeOption(':'); }">
```

And also, at the end of the page, Java Script need to add to make the search box will open a new window for the search result.

```
<script type="text/jscript">

function GoSearch(PmtId, TbId, HdQId, bApQ, bSc, DDId, HdSId, HdLId, HdFId,

Url, thisSite, thisList, thisFolder, relatedSites, csUrl)

{

  try

  {

  AddSearchoptionsToQuery();

  }

  catch(e) {}

  var k = document.forms[0].elements[TbId].value;

  k = k.replace( /\s*$/, '' );

  var ui = '1';
```

```
if (PmtId){
    ui = document.forms[0].elements[PmtId].Value;
}
if(k == '' || ui == '0'){
    alert('Please enter one or more search words.');
    if(null != event){
        event.returnValue = false;
        return false;
    }
    else return;
}
var sch = '?k=' + encodeURIComponent(k);


if(null != HdQId){
    var sa = document.forms[0].elements[HdQId].value;
    if (bApQ)
        sch += canonicalizedUtf8FromUnicode(" "+sa);
    else
        sch += '&a='+canonicalizedUtf8FromUnicode(" "+sa);
}
if(bSc){
    var s='', cs='', u='', selVal='';
    var d = document.forms[0].elements[DDId];
    var fIsCS = false;
    s = d.options[d.selectedIndex].text;
    selVal = d.options[d.selectedIndex].value;
    if (selVal==thisSite){
        cs =selVal; s='';
        u=document.forms[0].elements[HdSId].value;
        fIsCS = true;
    }
    if (selVal==thisList){
        cs =selVal; s='';
```

```
        u=document.forms[0].elements[HdLId].value;
        fIsCS = true;
    }
    if (selVal==thisFolder){
        cs =s; s='';
        u=document.forms[0].elements[HdFId].value;
        fIsCS = true;
    }
    if (s == relatedSites) {
        s = d.options[d.selectedIndex].value;
        fIsCS = true;
    }
    if(fIsCS)
    {
        Url = csUrl;
    }
    if (s != ''){
        sch += "&s=" + encodeURIComponent(s);
        if (d.options[d.selectedIndex].value != '' && !fIsCS) {
            Url = d.options[d.selectedIndex].value;
        }
    }
    if (cs != ''){
        sch += "&cs=" + encodeURIComponent(cs);
    }
    if (u != ''){
        sch += '&u=' + encodeURIComponent(u);
    }
}
var F=document.forms[0];

try {external.AutoCompleteSaveForm(F);} catch (err) {}
```

```
//window.location = Url + sch;
window.open( Url + sch);
try {if(null    != event) event.returnValue = false;} catch (err) {}
return;
}
</script>
```

So the invention hides intranet complexity while using Intranet-based content: end-user does not have to know who in the organization provides the information, nor where it is stored.

Aggregation of different types of contents is done within a consistent, shared vision of the Transformation through the Cartography (as opposed to hierarchical)

The invention structures the way new contents / activities are designed and classified for the Transformation, supports the development of a common language throughout the organization, supports evolution in terms of contents (new values, documents...), while keeping overall navigation consistency through the high-level cartography.

An d this does not require end-user training, reduced learning curve and no training investment

The estimated gain is 90% in terms of cost, compared to a on-the-shelf solution.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method to provide for an user a faceted access to data and contents **characterized in that** it comprises the step of building a customized navigation path for said user.

2. A method according to claim 1 **characterized in that** the step consisting in building a customized navigation path comprises the operation of using different gateways.

3. A method according to any previous claims **characterized in that** the data and contents to be accessed are stored in different sources without any duplication.

4. A method according to any previous claims **characterized in that** the user has a single entry point

Transformation Information Portal

Overview   Organizations   Roles §t Functions   Processes   Programs   Tools   | 1.Navigating with theTabs |   Quick Access

2.Navigating with the map

**Overview**

This portal allows you to find information about Alcatel-Lucent business transformation programs from different perspectives.

By navigating through the bubbles in the map. you will be able to combine different perspectives and to ultimately find the information that is relevant to your specific center of interest

Take & minute to respond the Satisfac

Organizations

Tools

Roles § Functions

Programs

Processes

FIG_1

EP 2 506 164 A1

# FIG_2

**Web parts**                                                                 X

web parts          Toolbox          Find 1                                    X

Browse                                                                    [▼]

Select the collection you want to browse.

| Transformation Infor... |

Server Gallery

**Web Part List**                                          ☐ **Filter**

Show: | Search   · |            [▼]

☐ | Advanced  Search  Box |

☐ Federated  Results

☐ People Search  Box

☐ People  Action  Links

☐ People  Best  Bets

☐ Search  Box

☐ Search Core  Results

☐ Search  High  Confide...

☐ Search  Paging

1 to  10 (of 13)                          Next

Europäisches
Patentamt

European
Patent Office

Office européen
des brevets

# EUROPEAN SEARCH REPORT

Application Number

EP 11 30 5342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 437 427 B1 (VEERARAGHAVAN VENKATESH [US] ET AL) 14 October 2008 (2008-10-14) * column 3, line 48 - line 62; figure 2 * * column 4, line 64 - column 5, line 28; figure 4 * | 1-4 | INV. G06F17/30 |
| X | SAH M ET AL: "SEMPort: A personalized semantic portal", HYPERTEXT 2007: PROCEEDINGS OF THE EIGHTEENTH ACM CONFERENCE ON HYPERTEXT AND HYPERMEDIA, HT'07, 10 September 2007 (2007-09-10), - 12 September 2007 (2007-09-12), pages 31-32, XP000002657224, ASSOCIATION FOR COMPUTING MACHINERY, US DOI: DOI:10.1145/1286240.1286248 * section 2.4 * | 1-4 | |
| A | US 2010/198866 A1 (STUART ANDREW [US]) 5 August 2010 (2010-08-05) * the whole document * | 1-4 | |
| | | | TECHNICAL FIELDS SEARCHED (IPC) G06F |

The present search report has been drawn up for all claims

| Place of search | Date of completion of the search | Examiner |
|---|---|---|
| Berlin | 19 August 2011 | Polzer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                         
& : member of the same patent family, corresponding document

EPO FORM 1503 03.82 (P04C01)

**EP 2 506 164 A1**

## ANNEX TO THE EUROPEAN SEARCH REPORT
## ON EUROPEAN PATENT APPLICATION NO.

EP 11 30 5342

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2011

| Patent document cited in search report | | | Publication date | Patent family member(s) | Publication date |
|---|---|---|---|---|---|
| US 7437427 | | B1 | 14-10-2008 | NONE | |
| US 2010198866 | | A1 | 05-08-2010 | NONE | |

EPO FORM P0459

For more details about this annex : see Official Journal of the European Patent Office, No. 12/82

14